# EUROPÄISCHE PATENTSCHRIFT

(11) **EP 3 037 795 B1**
(45) Veröffentlichungstag und Bekanntmachung des Hinweises auf die Patenterteilung: **21.02.2018**
(21) Anmeldenummer: 15201305.8
(22) Anmeldetag: 18.12.2015
(51) Int. Cl.: G01P 3/481, G01P 3/487, G01D 5/16, G01L 3/10, G01L 5/22

(54) **DREHMOMENT- UND WINKELSENSOR UND STELLANTRIEB**
TORQUE AND ANGLE SENSOR AND ACTUATOR
CAPTEUR D'ANGLE ET DE COUPLE ET MECANISME DE COMMANDE

(30) Priorität: 23.12.2014 DE 102014019547
(43) Veröffentlichungstag der Anmeldung: 29.06.2016
(73) Patentinhaber: Samson Aktiengesellschaft, 60314 Frankfurt (DE)
(72) Erfinder: Kolbenschlag, Stefan, 64291 Darmstadt (DE)
(74) Vertreter: Schmid, Nils T.F.

(56) Entgegenhaltungen:
- EP-A1- 1 382 510
- EP-A2- 1 077 359
- DE-A1- 19 951 575
- DE-U1-202012 010 675

## Beschreibung

Die Erfindung betrifft einen Drehmoment- und Winkelsensor zum Ermitteln eines von einem Antriebsteil auf ein Abtriebsteil zu übertragenden Drehmoments sowie eines absoluten Drehwinkels des Abtriebsteils. Insbesondere betrifft die Erfindung einen Drehmoment- und Winkelsensor zum Ermitteln eines von einem Stellantrieb einer prozesstechnischen Anlage, wie einer Raffinerie, einer lebensmittelverarbeitenden Anlage, einer petrochemischen Anlage oder dergleichen, auf ein Stellventil, wie eines pneumatisch betätigten Kugelhahns einer solchen Anlage, zu übertragenden Drehmoments sowie eines Drehwinkels. Die Erfindung betrifft auch einen Stellantrieb für eine prozesstechnische Anlage mit einem Drehmoment- und Winkelsensor zum Ermitteln eines von einem Antriebsteil des Stellantriebs auf ein Abtriebsteil eines Stellventils der prozesstechnischen Anlage zu übertragenden Drehmoments und eines Drehwinkels des Stellventils.

Ein bekannter Drehmoment- und Winkelsensor auf dem Gebiet der Kraftfahrzeugtechnik ist in DE 100 41 090 A1 offenbart. Der bekannte Drehmoment- und der Winkelsensor weist zwei an einer sehr steifen Lenkwelle angeordnete Coderäder auf, die von stationär gegenüber der drehbaren Lenkwelle fixierten Sensorelementen zur Detektion eines jeweiligen Verdrehwinkels der Coderäder abgetastet werden. Ein Drehmoment wird aus der Winkeldifferenz der beiden Coderäder berechnet. Der bekannte Drehmoment- und Winkelsensor hat allerdings den Nachteil, dass aufgrund der torsionssteifen Lenkwelle zwei sehr genau messende Winkelsensoren sowie aufwendige Kalibrier- und Messkorrekturverfahren erforderlich sind, um ein Drehmoment aus der Winkeldifferenz zu bestimmen. Fällt dabei einer der beiden Winkelsensoren aus, ist eine Drehmomentbestimmung nicht mehr möglich.

EP 1 382 510 A1 betrifft eine Vorrichtung zum Bestimmen eines Lenkwinkels und eines an einer Lenkwelle ausgeübten Drehmoments, wobei der Lenkwinkel optisch und das Drehmoment magnetisch bestimmt werden.

Es ist daher die Aufgabe der Erfindung, einen Drehmoment- und Winkelsensor bereitzustellen, der die Nachteile des Standes der Technik überwindet und insbesondere ein Drehmoment- und Winkelsignal mit möglichst geringem messtechnischen Aufwand zuverlässig bereitstellt.

Diese Aufgabe löst der Gegenstand von Anspruch 1.

Danach ist ein Drehmoment- und Winkelsensor zum Ermitteln eines von einem Antriebsteil auf ein Abtriebsteil zu übertragenden Drehmoments vorgesehen, der einen antriebsseitigen, zumindest teilweise umlaufenden Codierringabschnitt, wie einen Polringabschnitt, einen berührungslos arbeitenden Sensor zum Abtasten des antriebsseitigen Codierringabschnitts und einen abtriebsseitigen Codierringabschnitt, über den die Winkelposition des Abtriebsteils abtastbar ist, umfasst. Erfindungsgemäß ist der Sensor zum Abtasten des antriebsseitigen Codierringabschnitts mit dem antriebsseitigen Codierringabschnitt über eine Torsionsfederbrücke mit vorbestimmter Torsionselastizität gekoppelt.

Die Torsionsfederbrücke lässt eine genau vordefinierte Verwindung zwischen Antriebsteil und Abtriebsteil zu und erlaubt die direkte Messung der Verwindung mittels eines Sensors durch Abtasten der von dem antriebsseitigen Codierringabschnitt zurückgelegten Wegstrecke relativ zu einer Referenzposition des Sensors. Der Codierringabschnitt ist an einem Ende der Torsionsfederbrücke im Wesentlichen torsionsstarr oder zumindest mit einer vernachlässigbaren Torsionselastizität im Vergleich zur Brückenelastizität angebunden. Die Referenzposition des Sensors ist am gegenüberliegenden Ende der Torsionsfederbrücke festgelegt. Der abtriebsseitige absolute Drehwinkel wird durch einen weiteren abtriebsseitigen Codierringabschnitt, wie einen Teilpolring oder Polring, angezeigt. Diese Maßnahmen stellen eine Unabhängigkeit der Drehmomentmessung von der Winkelmessung sicher. Da nur die Relativverwindungsmessung zwischen antriebsseitigem Codierringabschnitt und dem über die Torsionsfederbrücke verbundenen Sensor eine hohe Genauigkeit erfordert, die absolute Winkelmessung jedoch vergleichsweise ungenau sein kann, ohne die Drehmomentmessung zu beeinträchtigen, kann für die Winkelmessung ein wesentlich einfacheres Messverfahren mit geringerer Genauigkeit eingesetzt werden, so dass insgesamt ein kostengünstiger und dennoch zuverlässig und genau messender Sensor bereitgestellt ist.

Es sei klar, dass das Abtriebsteil als Antriebsteil und das Antriebsteil als Abtriebsteil ohne Einschränkung der erfindungsgemäßen Lehre einsetzbar sind und diese funktionsgleiche Umkehr als alternative Ausgestaltung der Erfindung anzusehen ist.

Der Sensor zum Messen von Drehmoment und Winkel weist eine insbesondere in dem abtriebsseitig angeordneten Sensor integrierte Elektronik auf, die ein Drehmomentsignal und ein Winkelpositionssignal bereitstellt.

Das Drehmomentsignal und/oder das Winkelpositionssignal können digital oder analog übertragen werden, sodass beispielsweise der Winkelpositionssensor unmittelbar als Stellungsrückmelder wirken kann beziehungsweise ein Rückführungssignal für einen Stellungsregler beispielsweise eines Feldgeräts bereitstellen kann. Auf diese Weise können Messfehler infolge von Spiel reduziert werden. Ist der Drehmoment- und Winkelsensor Teil einer Prozesstechnischen Stellarmatur mit Stellantrieb und Stellventil, ermöglicht eine derartige Auslegung es, den Regler getrennt von Stellantrieb und/oder Stellventil zu montieren. Alternativ kann der erfindungsgemäße Drehmoment- und Winkelsensor zusätzlich zu einem herkömmlichen Stellungsregler verwendet werden, um das Spiel zwischen Stellantrieb und Drehmoment- und Winkelsensor zu messen.

Das Drehmomentsignal kann von der Auswerteeinheit bzw. der Leitwarte direkt für eine Diagnosefunktion verwendet werden, beispielsweise zur Überprüfung, ob ein Defekt vorliegt, wie eine gebrochene Stellwelle.

Die Elektronik kann über einen Schwellwerterfasser verfügen, der bei Über- oder Unterschreiten eines vorbestimmten Schwellwerts durch das insbesondere analoge Signal von dem Drehmomentsensor und/oder Drehwinkelsensor ein Warnsignal erzeugt, um insbesondere einen Test abzubrechen. Die Elektronik kann auch einen oder mehrere Schwellwerterfasser aufweisen, die anhand eines oberen und eines unteren Schwellwerts einen vorbestimmten Drehmoment- oder Winkelpositionsbereich definieren, wobei der bzw. die Schwellwerterfasser dazu ausgelegt sind, bei Verlassen des vorbestimmten Signalbereichs das Warnsignal zu erzeugen.

Vorzugsweise weist die Elektronik einen Grenzwerterfasser zum Erzeugen eines insbesondere digitalen Grenzwertsignals infolge einer Über- oder Unterschreitung eines vorbestimmten Grenzwerts, insbesondere eines Drehwinlcel- und/oder Drehmomentgrenzwerts, auf. Eine Sensoreinrichtung mit Grenzwerterfasser kann insofern als Grenzsignalgeber einsetzbar sein.

Der berührungslos arbeitende Sensor misst eine relative Positionsveränderung zwischen dem Sensor und einer insbesondere initialen, beispielsweise bei Betriebsaufnahme oder periodisch festgelegten, Referenzposition des Codierringabschnitts. Der Codierringabschnitt ist vorzugsweise durch eine insbesondere konzentrisch um eine Drehachse umlaufende optische oder magnetische Markierung oder mehrere Markierungen gebildet, die sich mit Abschnitten ohne Markierung abwechseln. Der durch die Markierungen und ggf. Nichtmarkierungen gebildete Code erstreckt sich entlang der vorbestimmten Bewegungsrichtung des Codierringabschnitts. Die sich ändernde Markierung wird durch den Sensor zum Abtasten des Codierringabschnitts erfasst und aus dem vorab bekannten Code lässt sich höchstgenau die zurückgelegte Wegstrecke identifizieren. Insbesondere weist der Codierringabschnitt ein regelmäßiges, vorzugsweise optisches oder magnetisches Markierungsprofil auf, das dem Sensor ein Abtasten der zurückgelegten Wegstrecke durch Auswertung des Markierungsprofils erlaubt. Es sei klar, dass der antriebsseitige Codierringabschnitt und der abtriebsseitige Codierringabschnitt gleich aufgebaut sein können oder zur Erhöhung der Betriebssicherheit gemäß unterschiedlichen Messprinzipien, wie optisch und magnetisch, realisiert sein können. Die Torsionsfederbrücke ist ein elastisches Soll-Deformationsteil, dessen Torsionselastizität bei der Auslegung des Sensors entsprechend der zu erwartenden Drehmomente und Wegauflösung des Sensors vorbestimmt wird. Der berührungslos arbeitende Sensor misst den Wegunterschied zwischen Antriebs- und Abtriebsteil. Aus dem Wegunterschied erzeugt der Sensor auf Basis der vorbestimmten Torsionselastizität ein zum Wegunterschied proportionales Drehmomentsignal. Bei einer bevorzugten Ausführung sind der abtriebsseitige Abtastsensor und der abtriebsseitige Codierringabschnitt starr, insbesondere torsionsstarr aneinandergekoppelt. Die Torsionsstarrheit zwischen abtriebsseitigem Abtastsensor und abtriebsseitigem Codierringabschnitt ist zumindest so hoch, dass bei einer Übertragung von Drehmomenten von dem Antriebsteil auf das Abtriebsteil in einem spezifizierten Nennbereich des Sensors keine von den Sensor auflösbare Relativbewegung messbar ist. Insbesondere sind der abtriebsseitige Abtastsensor und der abtriebsseitige Codierringabschnitt konzentrisch zur Torsionsfederbrücke angeordnet.

Bei einer bevorzugten Ausführung ermittelt der Drehmoment- und Winkelsensor das Drehmoment unabhängig von einer Abtastung der Winkelposition des Abtriebsteils. Insbesondere stellt der Drehmoment- und Winkelsensor ein Drehmomentsignal bereit, dass das wirkende Drehmoment aus einer Relativbewegung zwischen berührungslos arbeitendem Sensor zum Abtasten des antriebsseitigen Codierringabschnitts und dem antriebsseitigen Codierringabschnitt sowie der Torsionselastizität der Torsionsfederbrücke erzeugt. Diese direkte Messung lässt sich besonders kostengünstig und energiesparend realisieren. Der Sensor stellt simultan ein Signal bereit, das die absolute Winkelposition des Abtriebsteils relativ zu einer Initialposition in Bezug auf ein insbesondere ortsfestes Gehäuse oder eine Anbringung des Drehmoment- und Winkelsensors angibt. Bei einer anderen bevorzugten Ausführung wird das Drehmomentsignal zeit- oder wegabhängig ermittelt und/oder aufgezeichnet.

Bei einer bevorzugten Ausführung ist der Sensor zum Abtasten des antriebsseitigen Codierringabschnitts drehbeweglich relativ zu einer Winkelposition des Sensors zum Abtasten des abtriebsseitigen Codierringabschnitts angeordnet. Vorzugsweise ist der Winkelpositionssensor ortsfest relativ zum Sensor zum Abtasten des antriebsseitigen Codierringabschnitts oder zum antriebsseitigen Codierringabschnitt angeordnet. Insbesondere ist der Winkelpositionssensor an einem Sensorgehäuse und/oder einer Anbringung des Drehmoment- und/oder Winkelsensor angeordnet. Insbesondere sind der Sensor zum Abtasten des antriebsseitigen Codierringabschnitts und der Winkelpositionssensor über eine gemeinsame elektrische Versorgung angeschlossen. Vorzugsweise ist der maximale Winkelmessbereich des Winkelpositionssensors auf höchstens 180°, insbesondere 150°, 120° oder 90° begrenzt. Vorzugsweise erfolgt die Energieversorgung und die Signalübertragung des berührungslos arbeitenden Sensors zum Abtasten des antriebsseitigen Codierringabschnitts sowie des Winkelpositionssensors leitungsgebunden.

Bei einer bevorzugten Ausführung weist die Torsionsfederbrücke ein zwischen dem Antriebsteil und dem Abtriebsteil drehmomentübertragendes Verwindungsstück sowie einen von einem Drehmomentfluss zwischen Antriebs- und Abtriebsteil im Wesentlichen entkoppelten Sensorträger auf. Insbesondere nimmt das Verwindungsstück an einem antriebsseitigen Ende den antriebsseitigen Codierringabschnitt auf. Insbesondere ist an einem abtriebsseitigen Ende des Verwindungsstücks der Sensorträger befestigt. Es sei klar, dass der Sensorträger im Vergleich zum Verwindungsstück eine vernachlässigbare Torsionselastizität oder eine vielfache Torsionssteifigkeit aufweist. Insbesondere sind der abtriebsseitige Abtastsensor und der abtriebsseitige Codierringabschnitt axial versetzt angeordnet. Vorzugsweise umgibt der Sensorträger das Verwindungsstück in Form einer konzentrisch umlaufenden Hülse. Insbesondere überwindet das Verwindungsstück einen axialen Verbindungsbereich, der im Vergleich zum abtriebsseitigen und antriebsseitigen Anschlussende des Verwindungsstücks in dessen Querschnitt geschwächt ist. Durch die vorgenannten Maßnahmen wird eine besonders kompakte Bauweise erzielt.

Bei der Erfindung überwindet ein abtriebsseitig befestigter Sensorträger einen axialen Positionsversatz zwischen dem antriebsseitigen Codierringabschnitt und dem abtriebsseitigen Ende der Torsionsfederbrücke. Der abtriebsseitig befestigte Sensorträger ermöglicht somit eine direkte Relativrotationsmessung zwischen abtriebsseitigem Sensor und antriebsseitigem Codierringabschnitt. Außerdem lässt sich an der Sensorbrücke an beliebigen Axialpositionen entlang des überwundenen Axialversatzes der absolute Drehwinkel der Abtriebsseite abgreifen.

Insbesondere erstreckt sich der abtriebsseitig befestigte Sensorträger radial versetzt, insbesondere konzentrisch eines das Antriebsteil mit dem Abtriebsteil verbindenden Verwindungsstücks der Torsionsfederbrücke. Insbesondere umfasst der Sensorträger einen im Querschnitt verstärkten Axialabschnitt hoher Torsionssteifigkeit, über den die abtriebsseitige Drehung auf den abtriebsseitigen Sensor zum Abtasten des antriebsseitigen Codierringabschnitts übertragen ist.

Bei einer bevorzugten Ausführung weist der Drehmoment- und Winkelsensor eine insbesondere konzentrisch zu der Torsionsfederbrücke und/oder dem abtriebsseitigen Codierringabschnitt angeordnete Sensormanschette auf, an der ein berührungslos arbeitender Sensor zum Abtasten der Winkelposition an dem abtriebsseitigen Codierringabschnitt angeordnet ist. Insbesondere ist die Sensormanschette als bezüglich der Drehung des Antriebs- und/oder Abtriebsteils ortsfeste Referenzstelle des Drehmoment- und Winkelsensors realisiert. Vorzugsweise ist die Sensormanschette an einem ortsfesten Gehäuse des das Antriebsdrehmoment erzeugenden Geräts, wie eines Stellventilgehäuses, angeordnet. Die Sensormanschette kapselt sowohl den Winkelpositionssensor als auch den Sensor zum Abtasten des antriebsseitigen Codierringabschnitts sowie beide Codierringabschnitte in deren Inneren.

Bei einer bevorzugten Ausführung weist das Antriebsteil und/oder das Abtriebsteil eine Verdrehsicherung, wie einen Blockierstift zum wahlweisen Sperren des Antriebsteils und/oder des Abtriebsteils gegen ein Verdrehen relativ zu einer ortsfesten Sensormanschette auf. Insbesondere ist der Blockierstift radial von außen durch die Sensormanschette geführt und in dem Antriebs- und/oder Abtriebsteil verankert. Vorzugsweise ist in der Sensormanschette eine sich in Umfangsrichtung erstreckende Ausnehmung vorgesehen, durch die die Verdrehsicherung hindurchragt und welche eine maximale Verdrehung des Antriebs- und/oder Abtriebsteils relativ zur Sensormanschette festlegt. Insbesondere erstreckt sich die eine jeweilige Verdrehsicherung radial durch eine Öffnung in der Sensormanschette hindurch. Insbesondere ist der antriebsseitige Codierringabschnitt an einem manschettenseitigen Ende der jeweiligen Verdrehsicherung angeordnet. Insbesondere ist der Sensor zum Abtasten des antriebsseitigen Codierringabschnitts radial außerhalb der Sensormanschette angeordnet. Hierdurch wird eine besonders wartungsfreundliche Sensoranordnung realisiert und die Verdrehsicherungsfunktion mit der Sensorträgerfunktion vorzugsweise einstückig zusammengefasst.

Bei einer bevorzugten Ausführung weist der antriebsseitige Codierringabschnitt eine wenigstens doppelte, insbesondere 4-, 6-, 8-, 10- oder 50-fache Auflösung über dem abtriebsseitigen Codierringabschnitt auf. Insbesondere ist der abtriebsseitige Codierringabschnitt als magnetischer Polring mit weniger als 10, insbesondere weniger als 6, vorzugsweise 2 oder 4 Polen ausgeführt. Insbesondere ist der antriebsseitige Codierringabschnitt als magnetischer Polring, oder als Einzelmagnet, wie ein Stab- oder Rundmagnet mit zwei Polen ausgeführt. Insbesondere ist der Sensor zum Abtasten des antriebsseitigen Codierringabschnitts und/oder der Winkelpositionssensor an dem abtriebsseitigen Codierringabschnitt als AMR-Sensor ausgeführt. Aufgrund der niedrigeren Auflösungsanforderungen für die absolute Winkelmessung im Vergleich zur höher auflösenden Relativbewegungsmessung, kann ein besonders kostengünstiger Drehmoment- und Winkelsensor bereitgestellt werden. Die Drehmomentmessung bleibt dabei von der Funktion des Winkelsensors völlig unabhängig, so dass eine günstig aufgebaute Messelektronik für den Sensor zum Abtasten der Winkelposition eingesetzt werden kann.

Der Winkelpositionssensor kann den Codierringabschnitt alternativ beispielsweise optisch, insbesondere laseroptisch, induktiv, kapazitiv und/oder magnetoelastisch abtasten.

Bei einer bevorzugten Ausführung ist eine Radialverschiebung des antriebsseitigen Codierringabschnitts relativ zu dem abtriebsseitigen Sensor mittels eines insbesondere als Drehgleitlager ausgeführten Abstandshalters behindert. Insbesondere ist der Abstandshalter zwischen einem Sensorträger und dem Antriebsteil konzentrisch angeordnet, wobei der Sensorträger insbesondere als konzentrisch um das Antriebsteil angeordnete Hülse realisiert ist. Zwischen der Sensorträgerhülse und dem Antriebsteil ist konzentrisch der Abstandshalter eingepasst. Der konstante Radialabstand zwischen antriebsseitigem Codierringabschnitt und abtriebsseitigem Sensor ermöglicht höchst exakte Messungen.

Gemäß einem weiteren Aspekt der Erfindung ist ein Stellantrieb für eine prozesstechnische Anlage bereitgestellt, der ein Antriebsteil aufweist, das mit einem Abtriebsteil eines Stellventils der prozesstechnischen Anlage koppelbar ist. Der Stellantrieb weist einen erfindungsgemäßen Drehmomentsensor auf, der an das Antriebsteil des Stellantriebs mit dem Abtriebsteil des Stellventils verbindet.

Bei einer Weiterbildung dieses Erfindungsaspekts bildet der erfindungsgemäße Drehmoment- und Winkelsensor einen Teil einer Stellwelle oder Antriebswelle und/oder ist innerhalb eines Antriebs- oder Ventilgehäuses angeordnet. Insbesondere können Antriebs- und Stellwelle mit der Torsionsfederbrücke einstückig, vorzugsweise stoffschlüssig, ausgebildet sein. Vorteilhafte Ausgestaltungen sind in den Unteransprüchen angegeben.

Die Erfindung betrifft auch ein Kraftübertragungsteil, wie eine Stellstange oder eine Stellwelle, eines Feldgeräts/Stellgeräts, dessen pneumatischer Antrieb eine Stellarmatur, wie ein Stellventil, stellt. Dabei kann die Erfindung auch auf das Feldgerät/Stellgerät selbst gerichtet werden. Erfindungsgemäß ist der Federkörper als Kraftübertragungsteilabschnitt in dem Kraftübertragungsteil kraftübertragungsgemäß integriert.

Weitere Eigenschaften, Vorteile und Merkmale der Erfindung werden durch die folgende Beschreibung bevorzugter Ausführungen anhand der beiliegenden Zeichnungen erläutert, in denen zeigen:
- Fig. 1: eine perspektivische Darstellung eines ersten Ausführungsbeispiels des erfindungsgemäßen Drehmoment- und Winkelsensors;
- Fig. 2: eine Seitenansicht des Drehmoment- und Winkelsensors gemäß Fig. 1;
- Fig.: 3 eine Schnittdarstellung gemäß der Schnittlinie B-B der Fig. 2;
- Fig. 4: eine perspektivische Ansicht eines zweiten Ausführungsbeispiels eines erfindungsgemäßen Drehmoment- und Winkelsensor;
- Fig.: 5 eine erste Seitenansicht des Drehmoment- und Winkelsensors gemäß Fig. 4;
- Fig. 6: eine zweite Seitenansicht des Drehmoment- und Winkelsensors gemäß Fig. 4;
- Fig. 7: eine Schnittdarstellung des Drehmoment- und Winkelsensors gemäß der Schnittlinie A-A in Fig. 6, wobei zusätzlich eine Sensormanschette dargestellt ist, die in den Fig. 4 bis 5 nicht gezeigt ist; und
- Fig.: 8 eine schematische Darstellung eines erfindungsgemäßen Feldgeräts mit stilisiertem erfindungsgemäßem Drehmoment- und Winkelsensor.

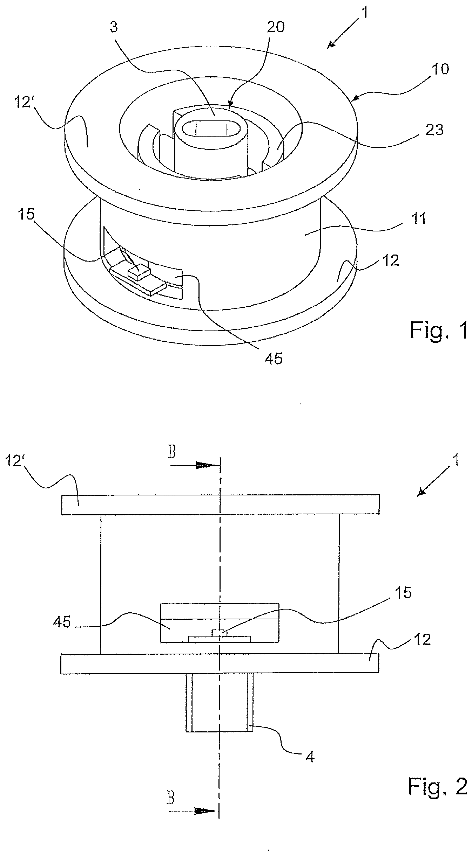

In Fig. 1 bis 3 ist der erfindungsgemäße Drehmoment- und Winkelsensor allgemein mit der Bezugsziffer 1 versehen. Der Drehmoment- und der Winkelsensor 1 weist ein Antriebsteil 3 auf, dem Drehantriebskräfte mitgeteilt werden, die beispielsweise von einem Stellantrieb einer prozesstechnischen Anlage erzeugt werden.

Der Drehmoment- und Winkelsensor 1 ist im Wesentlichen bereitgestellt als integrierte montagefertige Messzelle bestehend aus einem Stator 10, der im Wesentlichen ortsfest, also stellunbeweglich oder stationär an einem Stellantrieb, Stellventil oder einem den Stellantrieb mit dem Stellventil verbindenden Joch angeordnet ist, und einem relativ zum Stator 10 drehbeweglich gelagerten Rotor 20. Der Stator 10 ist als eine den Rotor 20 rotationssymmetrisch umgebende Sensormanschette 11 ausgeführt. An den axialen Enden der Sensormanschette 11 ist jeweils ein radial nach außen vorstehender Ringflansch 12, 12' ausgebildet.

Der Rotor 20 umfasst eine drehmomentübertragende Welle, die sich durch den Stator 10 hindurch erstreckt. Ein an einem axialen Ende der Welle ist ein Antriebsteil 3 ausgebildet, das eine Formaufnahme 31 aufweist, in die eine Antriebswelle eines Stellantriebs formschlüssig zur Kraftübertragung eingreifen kann. Das Antriebsteil 3 mündet axial in eine Torsionsfederbrücke 9, die über einen Verwindungsabschnitt oder ein Verwindungsstück 21 erhöhter Torsionselastizität das Antriebsteil 3 mit einem am dem Antriebsteil 3 gegenüberliegenden axialen Ende der Welle ausgebildeten Abtriebsteil 4 verbindet. Der Verwindungsabschnitt 21 hat zur Erhöhung der Torsionselastizität einen entlang eine vordefinierte Länge L1 um etwa 20 % verringerten Wellendurchmesser. Der Wellendurchmesser und die Wellenquerschnittsform sind derart bemessen, das eine definierte Torsionselastizität entlang der Länge L1 der Welle vorbestimmt ist.

Am torsionsfederbrückenseitigen Ende des Antriebsteils 3 ist ein Codierringabschnitt 5 an dem Antriebsteil angebracht. Der Codierringabschnitt 5 ist als magnetischer Polring mit einer steilen Weg-Feldlinienänderungs-Kennlinie ausgeführt und auf das Antriebsteil 3 drehfest aufgesteckt oder an diesem angeklebt.

Am torsionsfederbrückenseitigen Beginn des Abtriebsteils 4 ist ein als Hülse ausgebildeter Sensorträger 23 befestigt, die das Verwindungsstück 21 und das Antriebsteil 3 zumindest teilweise konzentrisch umgibt. Der Sensorträger 23 steht ausschließlich abtriebsseitig in einer kraft- und/oder momentübertragenden Verbindung mit der Welle.

Die Hülse weist drei Abschnitte unterschiedlicher Durchmesser und Wandstärken auf, so dass sich an deren Außenseite eine Abstufung in Axialrichtung ergibt. Ein Abschnitt geringsten Außendurchmessers und geringster Wandstärke dient zur Befestigung am Abtriebsteil 4. Ein mittlerer Abschnitt größter Wandstärke und mittleren Außendurchmessers erstreckt sich im Wesentlichen längs des Verwindungsstücks 21 der Torsionsfederbrücke 9. Ein Tragabschnitt mittlerer Wandstärke und größten Außendurchmessers schließt sich im Wesentlichen auf axialer Höhe des Antriebsteils 3 an den mittleren Abschnitt an.

An der Hülse ist in einer Wandausnehmung ein Sensor 7 zum Abtasten des antriebsseitigen Codierringabschnitts 5 angeordnet. Der Sensor 7 ist als AMR-Sensor ausgeführt und im Wesentlichen auf gleicher Höhe zu dem Codierringabschnitt 5, nämlich dem Polring, angeordnet. An dem Außenumfang der Hülse ist ein zweiter Codierringabschnitt 6, nämlich ein zweiter Polring, verdrehfest aufgesteckt oder angeklebt. Der abtriebsseitige Codierringabschnitt 6 dreht sich exakt mit einer Verdrehung des Abtriebsteils 4.

Der Codierringabschnitt 6 weist eine geringere Drehwegauflösung als der antriebsseitige Codierringabschnitt 5 auf. Der abtriebsseitige Codierringabschnitt 6 kann beispielsweise ein magnetischer Polring mit einer im Vergleich flacheren Weg-Feldlinienänderungs-Kennlinie sein.

In der Sensormanschette 11 ist auf der axialen Höhe des abtriebsseitigen Codierringabschnitts 6 eine Wandausnehmung 45 ausgebildet, in der ein stationärer Sensor 15 angeordnet ist, der den abtriebsseitigen Codierringabschnitts 6 abtastet.

Ist das Abtriebsteil an einen mechanischen Drehwiderstand, wie ein Stellventil, einen Kugelhahn oder eine Ventilklappe, gekoppelt und wird dem Antriebsteil 3 durch einen Stellantrieb ein Drehmoment mitgeteilt, erfolgt eine Drehmomentübertragung entlang des Verwindungsstücks 21 der Torsionsfederbrücke 9. Bei der Drehmomentübertragung verwindet sich das Verwindungsstück 21 gemäß den Grundregeln der Elastizitätslehre entlang der Länge L₁ um einen durch die Geometrie des Verwindungsstücks 21 und dessen Schub- oder Elastizitätsmoduls bestimmten Winkel, so dass sich zwischen dem antriebsseitigen Ende des Verwindungsstücks 21 und dem abtriebsseitigen Ende eine Verdrehungs- oder Drehwinkeldifferenz ergibt. Die Drehwinkeldifferenz zwischen dem antriebsseitig befestigten Codierringabschnitt 5 und dem abtriebsseitig angekoppelten, über die Sensorbrücke axial auf Höhe des Codierringabschnitts 5 versetzten Sensor 7, wird von dem Sensor 7 gemessen. Zum Beispiel verändert Relativdrehung zwischen Sensor 7 und Codierringabschnitt 5, der als Polring ausgeführt ist, die Lage des Sensors 7 innerhalb der zwischen den Polen des Polrings verlaufenden Feldlinien, die von einem magnetischen Feldsensor ausgewertet und direkt in Proportion zu einem Verdrehwinkel gesetzt wird. Die Relativbewegung zwischen Codierringabschnitt 5 und Sensor 7 wird bei einem AMR-Sensor direkt, insbesondere ohne weitere Winkelmessungen in ein Drehmoment umgerechnet werden. Die Relativbewegungsamplitude zwischen Codierringabschnitt 5 und Sensor 7 liegt dabei in einem Bereich von wenigen Zehnteln Millimeter und ist hinsichtlich des auf das Abtriebsteil 4 aufzubringenden Drehstellwegs vernachlässigbar.

Der an dem Sensorträger 23 angeordnete abtriebsseitige Codierringabschnitt 6 dreht sich starr und ohne Relativbewegung bezüglich des Abtriebsteils 4 winkelgleich mit dem Abtriebsteil 4, so dass ein absoluter Drehwinkel gegenüber der ortsfesten Sensormanschette 11 über den Sensor 15 messbar ist. Dazu kann die gleiche AMR-Technik wie bei dem Sensor 7 zum Einsatz kommen, wobei ein Polring mit einer flacheren Kennlinie zum Einsatz kommt, um den gesamten zulässigen Drehwinkelbereich messtechnisch abzubilden. Vorzugsweise ist der Winkelmessbereich kleiner 120°, insbesondere zwischen 0° und 90°.

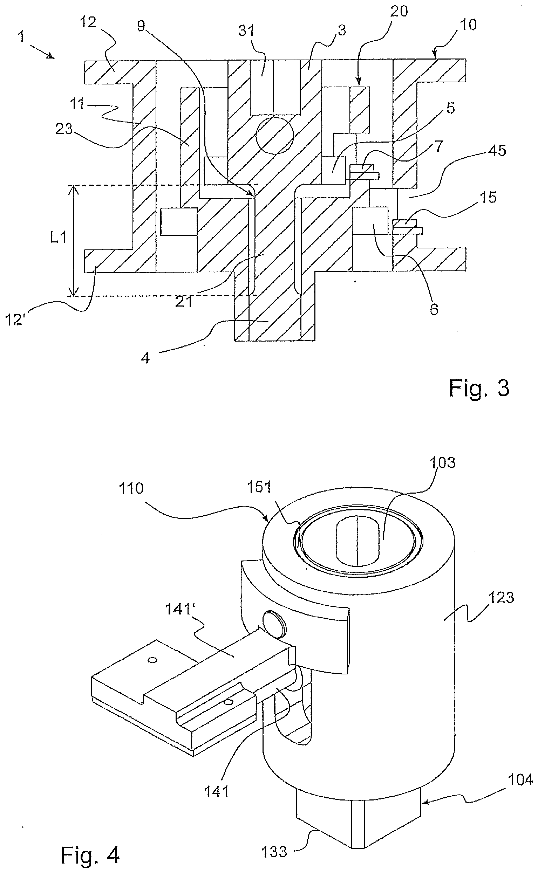

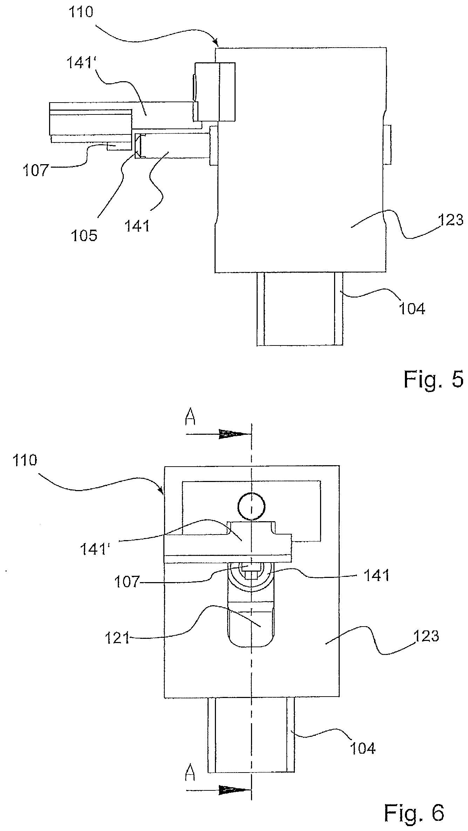

In den Fig. 4 bis 7 ist ein zweites Ausführungsbeispiel eines erfindungsgemäßen Drehmoment- und Winkelsensors 101 dargestellt, der in vielen Merkmalen dem Drehmoment- und Winkelsensor 1 der Fig. 1 bis 3 gleicht. Gleiche oder gleichartige Bestandteile sind daher mit gleichen Bezugsziffern versehen, die um 100 erhöht sind.

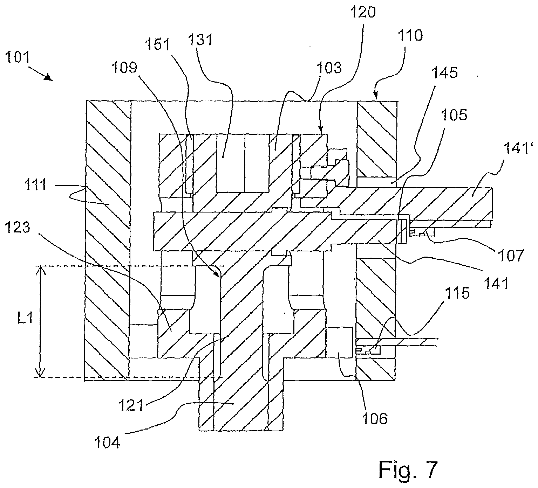

In Fig. 4 bis 6 ist der erfindungsgemäße Drehmoment- und Winkelsensor 101 in seiner zweiten Ausführungsform ohne eine Sensormanschette 111 dargestellt. Die Sensormanschette 111 ist allerdings in der Querschnittsansicht der Fig. 7 gezeigt. Die Sensormanschette 111 des zweiten Ausführungsbeispiels unterscheidet sich von der Sensormanschette des ersten Ausführungsbeispiels gemäß Fig. 1 bis 3 im Wesentlichen darin, dass an den axialen Enden keine radial nach außen überstehenden Ringflansche 12, 12' vorgesehen sind und neben der Wandausnehmung zur Aufnahme eines Sensors 115 zum Abtasten der Winkelposition des abtriebsseitigen Codierringabschnitts 106 eine zweite Wandausnehmung oder Öffnung 145 etwa auf axialer Höhe des Antriebsteils 104 vorgesehen ist.

Das Antriebsteil 104 des Drehmoment- und Winkelsensors 101 unterscheidet sich vom Antriebsteil gemäß Fig. 1 bis 3 dadurch, dass es eine das Antriebsteil 104 radial durchdringende Aufnahme oder Bohrung aufweist, in die ein Blockierstift als Verdrehsicherung 141 durch die Wandausnehmung 145 in der Sensormanschette 111 einsteckbar ist. Der Blockierstift 141 ist axial derart dimensioniert, dass dieser in dem Antriebsteil 104 verankert werden kann und von radial innen durch die Wandausnehmung 145 nach außen ragt. Die Wandausnehmung 145 ist in Umfangsrichtung der Sensormanschette 111 derart bemessen, dass eine Verdrehung des Antriebsteils 104 und damit des Blockierstifts nur innerhalb eines durch die Umfangslänge der Wandausnehmung 145 und die Breite des Blockierstifts vorbestimmten Winkelbereich möglich ist. Damit ist eine Verdrehsicherung 141 für das Antriebsteil 103 realisiert.

Der bei Fig. 1 bis 3 unmittelbar an dem Antriebsteil 3 aufgesteckte Codierringabschnitt 6 ist bei dem Drehmoment- und Winkelsensor 101 an dem manschettenseitigen Stirnende des Blockierstifts als Codierringabschnitt 105 befestigt. Der Codierringabschnitt 105 ist als Permanentmagnet ausgeführt.

Der Sensorträger 123 unterscheidet sich von dem Sensorträger 23 gemäß Fig. 1 bis 3 dadurch, dass der Sensor zum Abtasten des antriebsseitigen Codierringabschnitts 105 nicht unmittelbar an der Hülse des Sensorträgers befestigt ist. Der Sensor 107 zum Abtasten des antriebsseitigen Codierringabschnitts 105 ist durch einen Tragarm nach radial außen versetzt. Der Tragarm erstreckt sich im Wesentlichen parallel zu dem Blockierstift 141 durch die Wandausnehmung 145 in der Manschette 111. Der Tragarm bildet somit eine Verdrehsicherung 141' des Abtriebteils 104 gegenüber der stellantriebs- und/oder stellventilortsfesten Manschette 111. Der Tragarm ist an der Sensorträgerhülse mittels eines Befestigungsstifts oder einer Schraube angebracht. Da der antriebsseitige Sensor 105 blockierstiftstirnseitig angeordnet ist und der Sensor 107 mittels der Verdrehsicherung 141' radial nach außen verlagert sind, ist ein Zugriff auf die Sensorik manschettenaußenseitig erleichtert.

Durch die Verlagerung der Drehmomentsensorik nach radial außen, vergrößert sich der bei einer Verwindung der Torsionsfederbrücke 109 der durch den Codierringabschnitt 105 relativ zu dem Sensor 107 zurückgelegte Umfangsweg, so dass mit einer relativ geringen Auflösung auch nur minimale Deformationen des Verwindungsabschnitts 121 erfassbar sind.

Das Antriebsteil 104 ist gegenüber dem Sensorträger 123 mittels einer Gleitlagerhülse 151 drehbar gleitend gelagert. Die Gleitlagerhülse legt einen radialen Abstand zwischen antriebsseitigem Codierringabschnitt 105 und abtriebsseitigem Sensor 107 exakt fest und verhindert eine die Messung verfälschende Abstandsänderung in Radialrichtung.

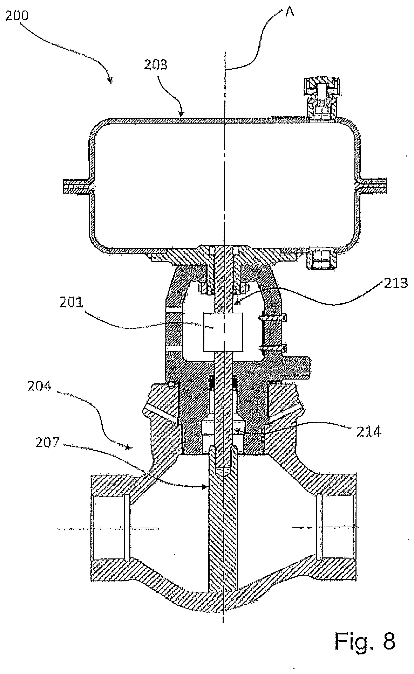

Figur 8 zeigt ein Feldgerät 200, das einen nur schematisch dargestellten Schwenk-Stellantrieb 203 aufweist, mit dem ein Stellventil 204 des Feldgeräts 200 betätigt wird. Das Feldgerät 200 hat eine als Stellventil 204 ausgebildete Stellarmatur mit ebenfalls nur schematisch dargestelltem rotationsbeweglichem Ventilglied 207 bzw. Drosselklappe. Zum Übertragen des Stelldrehmoments von dem Stellantrieb 203 auf das Ventilglied 207 sind eine Stellwelle 214 und eine Antriebswelle 213 vorgesehen.

In Figur 8 ist eine zwischen der Stellwelle 214 und der Antriebswelle 213 des Feldgeräts 200 vorgesehener Drehmoment- und Winkelsensor 201 rein schematisch dargestellt. Der Drehmoment- und Winkelsensor 201 umfasst eine (in Figur 8 nicht näher dargestellte) Torsionsfederbrücke, das den von dem Stellantrieb 203 für das Stellventil 204 bereitgestellten Stelldrehmoment überträgt. Als Stellglied ist ein Ventilglied 207 vorgesehen, welches zum Schließen oder Öffnen des Ventils 204 relativ zur Schwenkachse A der Wellen 214, 213 drehbeweglich ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101, 201: Drehmoment- und Winkelsensor
- 3, 103: Antriebsteil
- 4, 104: Abtriebsteil
- 5, 6, 105, 106: Codierringabschnitt
- 7, 107: Sensor
- 9, 109: Torsionsfederbrücke
- 10: Stator
- 11, 111: Sensormanschette
- 12, 12': Ringflansch
- 15, 115: Sensor
- 20: Rotor
- 21, 121: Verwindungsstück
- 23, 123: Sensorträger
- 31: Formaufnahme
- 141, 141': Verdrehsicherung
- 145: Öffnung
- 151: Gleitlagerhülse
- 200: Feldgerät
- 203: Stellantrieb
- 204: Stellventil
- 207: Ventilglied
- 213: Antriebswelle
- 214: Stellwelle
- A: Schwenkachse
- L1: Länge

## Patentansprüche

1. Drehmoment- und Winkelsensor (1, 101) zum Ermitteln eines von einem Antriebsteil (3, 103) auf ein Abtriebsteil (4, 104) zu übertragenden Drehmoments, umfassend einen antriebsseitigen, zumindest teilweise umlaufenden Codierringabschnitt (5, 105), wie einen Polringabschnitt, einen berührungslos arbeitenden Sensor (7, 107) zum Abtasten des antriebsseitigen Codierringabschnitts (5, 105) und einen abtriebsseitigen Codierringabschnitt (6, 106), über den die Winkelposition des Abtriebsteils (4, 104) abtastbar ist, **dadurch gekennzeichnet, dass** der Sensor (7, 107) zum Abtasten des antriebsseitigen Codierringabschnitts (5, 105) mit dem antriebsseitigen Codierringabschnitt (5, 105) über eine Torsionsfederbrücke (9, 109) mit vorbestimmter Torsionselastizität gekoppelt ist, wobei ein abtriebsseitig befestigter Sensorträger (23, 123) einen axialen Positionsversatz zwischen dem antriebsseitigen Codierringabschnitt (5, 105) und dem abtriebsseitigen Ende der Torsionsfederbrücke (9, 109) überwindet, wobei der abtriebsseitig angekoppelte Sensor (7, 107) axial auf Höhe des Codierringabschnitts (5, 105) versetzt ist, und wobei der Drehmoment- und Winkelsensor (1, 101) einen berührungslos arbeitenden Sensor (15, 115) zum Abtasten der Winkelposition an dem abtriebsseitigen Codierringabschnitts (6, 106) aufweist.

2. Drehmoment- und Winkelsensor (1, 101) nach Anspruch 1, **dadurch gekennzeichnet, dass** der abtriebsseitige Abtastsensor (7, 107) und der abtriebsseitige Codierringabschnitt (6, 106) starr, insbesondere torsionsstarr, aneinander gekoppelt sind.

3. Drehmoment- und Winkelsensor (1, 101) nach einem der vorstehenden Ansprüche, **dadurch gekennzeichnet, dass** der Drehmoment- und Winkelsensor (1, 101) das Drehmoment unabhängig von einer Abtastung der Winkelposition des Abtriebsteils ermittelt.

4. Drehmoment- und Winkelsensor (1, 101) nach einem der vorstehenden Ansprüche, **dadurch gekennzeichnet, dass** der Sensor (7, 107) zum Abtasten des antriebsseitigen Codierringabschnitts (5, 105) drehbeweglich relativ zu einem Winkelpositionssensor zum Abtasten des abtriebsseitigen Codierringabschnitts (6, 106) angeordnet ist.

5. Drehmoment- und Winkelsensor (1, 101) nach einem der vorstehenden Ansprüche, **dadurch gekennzeichnet, dass** die Torsionsfederbrücke (9, 109) ein zwischen dem Antriebsteil (3, 103) und dem Abtriebsteil (4, 104) drehmomentübertragendes Verwindungsstück (21, 121) sowie einen von einem Drehmomentfluss zwischen Antriebs- und Abtriebsteil im Wesentlichen entkoppelten Sensorträger (23, 123) aufweist, wobei insbesondere das Verwindungsstück (21, 121) an einem antriebsseitigen Ende den antriebsseitigen Codierringabschnitt (5, 105) aufnimmt und/oder der Sensorträger (23, 123) an einem abtriebsseitigen Ende des Verwindungsstücks (21, 121) befestigt ist.

6. Drehmoment- und Winkelsensor (1, 101) nach einem der vorstehenden Ansprüche, **dadurch gekennzeichnet, dass** der abtriebsseitig befestigte Sensorträger (23, 123) sich radial versetzt, insbesondere konzentrisch, zu einem das Antriebsteil (4, 104) mit dem Abtriebsteil (4, 104) verbindenden Verwindungsstück (21, 121) der Torsionsfederbrücke (9, 109) erstreckt.

7. Drehmoment- und Winkelsensor (1, 101) nach einem der vorstehenden Ansprüche, **dadurch gekennzeichnet, dass** der Drehmoment- und Winkelsensor (1, 101) eine insbesondere konzentrisch zu der Torsionsfederbrücke (9, 109) und/oder dem abtriebsseitigen Codierringabschnitt (6, 106) angeordnete Sensormanschette (11, 111) aufweist, an der der berührungslos arbeitende Sensor (15, 115) zum Abtasten der Winkelposition an dem abtriebsseitigen Codierringabschnitts (6, 106) angeordnet ist.

8. Drehmoment- und Winkelsensor (101) nach einem der vorstehenden Ansprüche, **dadurch gekennzeichnet, dass** das Antriebsteil (103) und/oder das Abtriebsteil (104) eine Verdrehsicherung (141, 141'), wie einen Blockierstift, zum wahlweisen Sperren des Antriebsteils (103) und/oder des Abtriebsteils (104) gegen Verdrehen relativ zu einer ortsfesten Sensormanschette (111) aufweist, wobei sich insbesondere eine jeweilige Verdrehsicherung (141, 141') radial durch eine Öffnung (145) in der Sensormanschette hindurch erstreckt und/oder der antriebsseitige Codierringabschnitt (105) an einem manschettenseitigen Ende der jeweiligen Verdrehsicherung (141) angeordnet ist und/oder dass der Sensor (107) zum Abtasten des antriebsseitigen Codierringabschnitts (105) radial außerhalb der Sensormanschette (111) angeordnet ist.

9. Drehmoment- und Winkelsensor (1, 101) nach einem der vorstehenden Ansprüche, **dadurch gekennzeichnet, dass** der antriebsseitige Codierringabschnitt (5, 105) eine wenigstens doppelte, insbesondere 4-, 6-, 8-, 10- oder 50-fache Auflösung gegenüber dem abtriebsseitigen Codierringabschnitt (6, 106) aufweist, wobei insbesondere der abtriebsseitige Codierringabschnitt (6, 106) als magnetischer Polring mit weniger als 10, insbesondere weniger als 6, vorzugsweise 2 oder 4 Polen ausgeführt ist und/oder dass der antriebsseitige Codierringabschnitt (5, 105) als magnetischer Polring oder als Einzelmagnet ausgeführt ist und/oder dass der Sensor (7, 107) zum Abtasten des antriebsseitigen Codierringabschnitts (5, 105) und/oder ein Sensor (15, 115) zum Abtasten der Winkelposition an dem abtriebsseitigen Codierringabschnitt (6, 106) als AMR Sensor ausgeführt ist.

10. Drehmoment- und Winkelsensor (1, 101) nach einem der vorstehenden Ansprüche, **dadurch gekennzeichnet, dass** eine Radialverschiebung des antriebsseitigen Codierringabschnitt (5, 105) relativ zu dem abtriebsseitigen Sensor (7, 107) mittels eines insbesondere als Drehgleitlager ausgeführten Abstandshalter behindert ist.

11. Stellantrieb für eine prozesstechnische Anlage umfassend ein insbesondere pneumatisch gestelltes Antriebsteil zum Koppeln an ein Abtriebsteil eines Stellventils der prozesstechnischen Anlage mit einem nach einem der vorstehenden Ansprüche ausgebildeten Drehmoment- und Winkelsensor (1, 101) zum Ermitteln des von dem Antriebsteil auf das Abtreibsteil übertragenen Drehmoments.

## Claims

1. Torsional moment and angle sensor (1, 101) for determining a torsional moment to be transferred from a drive member (3, 103) to a driven member (4, 104), comprising an at least partially circumferential drive side encoder ring section (5, 105), such as a pole ring section, a contactless operating sensor (7, 107) for scanning the drive side encoder ring section (5, 105), and a driven side encoder ring section (6, 106) via which the angular position of the driven member (4, 104) can be scanned,
**characterized in that**
the sensor (7, 107) for scanning the drive side encoder ring section (5, 105) is coupled to the drive side encoder ring section (5, 105) via a torsion spring bridge (9, 109) having a predetermined torsional elasticity, wherein a sensor carrier (23, 123) attached at the driven side spans an axial offset between the drive side encoder ring section (5, 105) and the driven side end of the torsion spring bridge (9, 109), wherein the sensor (7, 107) coupled to the driven side is axially displaced on the height of the encoder ring section (5, 105), and wherein the torsional moment and angle sensor (1, 101) includes a contactless operating sensor (15, 115) for scanning the angular position on the driven side encoder ring section (6, 106).

2. Torsional moment and angle sensor (1, 101) according to claim 1, **characterized in that** the driven side scanning sensor (7, 107) and the driven side encoder ring section (6, 106) are rigidly, particularly torsion-resistant, coupled to one another.

3. Torsional moment and angle sensor (1, 101) according to one of the preceding claims,
**characterized in that** the torsional moment and angle sensor (1, 101) determines the torsional moment independent of a scan of the angular position of the driven member.

4. Torsional moment and angle sensor (1, 101) according to one of the preceding claims,
**characterized in that** the sensor (7, 107) for scanning the drive side encoder ring section (5, 105) is arranged rotatably relative to an angle position sensor for scanning the driven side encoder ring section (6, 106).

5. Torsional moment and angle sensor (1, 101) according to one of the preceding claims,
**characterized in that** the torsion spring bridge (9, 109) includes a torsion transferring distortion portion (21, 121) between the drive member (3, 103) and the driven member (4, 104) as well as a sensor carrier (23, 123) which is essentially decoupled from torsion flowing between the drive member and the driven member, wherein in particular the distortion portion (21, 121) receives on a drive side end thereof the drive side encoder ring section (5, 105) and/or the sensor carrier (23, 123) is attached to a driven side end of the distortion portion (21, 121).

6. Torsional moment and angle sensor (1, 101) according to one of the preceding claims,
**characterized in that** the sensor carrier (23, 123) attached at the driven side extends radially displaced, in particular concentrically, with respect to a distortion portion (21, 121) at the torsion spring bridge (9, 109) which distortion portion (21, 121) connects the drive member (3, 103) with the driven member (4, 104).

7. Torsional moment and angle sensor (1, 101) according to one of the preceding claims,
**characterized in that** the torsional moment and angle sensor (1, 101) comprises a sensor sleeve (11, 111) particularly arranged concentrically with respect to the torsion spring bridge (9, 109) and/or with respect to the driven side encoder ring section (6, 106), on which the contactless operating sensor (15, 115) for scanning the angular position on the driven side encoder ring section (6, 106) is arranged.

8. Torsional moment and angle sensor (1, 101) according to one of the preceding claims,
**characterized in that** the drive member (103) and/or the driven member (104) includes a torsion protection (141, 141'), such as a lock pin, for selectively locking the drive member (103) and/or the driven member (104) against torsion relative to a stationary sensor sleeve (111), wherein in particular a respective torsion protection (141, 141') extends radially through an opening (145) in the sensor sleeve (111) and/or the drive side encoder ring section (105) is arranged at a sleeve side end of the respective torsion protection (141) and/or the sensor (107) for scanning the drive side encoder ring section (105) is arranged radially outside the sensor sleeve (111).

9. Torsional moment and angle sensor (1, 101) according to one of the preceding claims,
**characterized in that** the drive side encoder ring section (5, 105) includes an at least doubled, particularly 4-, 6- , 8- , 10- or 50- fold increased resolution with respect to the driven side encoder ring section (6, 106), wherein in particular the driven side encoder ring section (6, 106) is realized as a magnetic pole ring having less than 10, particularly less than 6, preferably 2 or 4, poles and/or wherein the drive side encoder ring section (5, 105) is realized as a magnetic pole ring or single magnet and/or wherein the sensor (7, 107) for scanning the drive side encoder ring section (5, 105) and/or a sensor (15, 115) for scanning the angular position on the driven side encoder ring section (6, 106) is realized as an AMR sensor.

10. Torsional moment and angle sensor (1, 101) according to one of the preceding claims,
**characterized in that** a radial displacement of the drive side encoder ring section (5, 105) relative to the driven side sensor (7, 107) is disabled by means of a spacer which is particularly realized as a rotational slide bearing.

11. Actuator drive for a processing plant including a particularly pneumatically actuated drive member for coupling to a driven member of a positioning valve of the processing plant including a torsional moment and angle sensor (1, 101) for determining the torsional moment being transferred from the drive member to the driven member.

## Revendications

1. Capteur de couple et d'angle (1, 101) destiné à détecter un couple à transmettre d'un élément d'entraînement (3, 103) à un élément de sortie (4, 104), comprenant une section de bague de codage au moins partiellement périphérique côté entraînement (5, 105), tel qu'une section de bague polaire, un capteur travaillant sans contact (7, 107) pour la détection de la section de bague de codage côté entraînement (5, 105), et une section de bague de codage côté sortie (6, 106) par le biais de laquelle la position angulaire de l'élément de sortie (4, 104) peut être détectée, **caractérisé en ce que** pour détecter la section de bague de codage côté entraînement (5, 105), le capteur (7, 107) est accouplé à la section de bague de codage côté entraînement (5, 105) par le biais d'un pont à ressort de torsion (9, 109) avec une élasticité en torsion prédéfinie, où un support de capteur (23, 123) fixé côté sortie surmonte un décalage de position axial entre la section de bague de codage côté entraînement (5, 105) et l'extrémité côté sortie du pont à ressort de torsion (9, 09), où le capteur (7, 107) accouplé côté sortie est décalé axialement à la hauteur de la section de bague de codage (5, 105), et où le capteur de couple et d'angle (1, 101) comporte un capteur travaillant sans contact (15, 115) pour la détection de la position angulaire sur la section de bague de codage côté sortie (6, 106).

2. Capteur de couple et d'angle (1, 101) selon la revendication 1, **caractérisé en ce que** le capteur d'exploration côté sortie (7, 107) et la section de bague de codage côté sortie (6, 106) sont accouplés fixement l'un à l'autre, en particulier fixement en torsion.

3. Capteur de couple et d'angle (1, 101) selon l'une des revendications précédentes, **caractérisé en ce que** le capteur de couple et d'angle (1, 101) détermine le couple indépendamment d'une détection de la position angulaire de l'élément de sortie.

4. Capteur de couple et d'angle (1, 101) selon l'une des revendications précédentes, **caractérisé en ce que** le capteur (7, 07) pour la détection de la section de bague de codage côté entraînement (5, 05) est disposé de façon mobile en rotation par rapport à un capteur de position angulaire pour la détection de la section de bague de codage côté sortie (6, 106).

5. Capteur de couple et d'angle (1, 101) selon l'une des revendications précédentes, **caractérisé en ce que** le pont à ressort de torsion (9, 109) comporte une pièce de torsion (21, 121) transmettant un couple entre l'élément d'entraînement (3, 103) et l'élément de sortie (4, 104), ainsi qu'un support de capteur (23, 123) essentiellement désaccouplé d'un flux de couple entre l'élément d'entraînement et l'élément de sortie, où la pièce de torsion (21, 121) reçoit en particulier la section de bague de codage côté entraînement (5, 105) à une extrémité côté entraînement et/ou le support de capteur (23, 123) est en particulier fixé à une extrémité côté sortie de la pièce de torsion (21, 121).

6. Capteur de couple et d'angle (1, 101) selon l'une des revendications précédentes, **caractérisé en ce que** le support de capteur (23, 123) fixé côté sortie s'étend de façon radialement décalée, en particulier de façon concentrique, par rapport à une pièce de torsion (21, 121) du pont à ressort de torsion (9, 109) reliant l'élément d'entraînement (3, 103) à l'élément de sortie (4, 104).

7. Capteur de couple et d'angle (1, 101) selon l'une des revendications précédentes, **caractérisé en ce que** le capteur de couple et d'angle (1, 101) comporte une manchette de capteur (11, 111) disposée en particulier de façon concentrique par rapport au pont à ressort de torsion (9, 109) et/ou à la section de bague de codage côté sortie (6, 106), sur laquelle est disposé le capteur travaillant sans contact (7, 107) pour la détection de la position angulaire sur la section de bague de codage côté sortie (6, 106).

8. Capteur de couple et d'angle (101) selon l'une des revendications précédentes, **caractérisé en ce que** l'élément d'entraînement (103) et/ou l'élément de sortie (104) comporte une protection anti-rotation (141, 141'), telle qu'une tige de blocage, pour le verrouillage sélectif de l'élément d'entraînement (3, 103) et/ou de l'élément de sortie (4, 104) contre une rotation par rapport à une manchette de capteur fixe (111), où une protection anti-rotation (141, 141') respective s'étend en particulier radialement à travers une ouverture (145) dans la manchette de capteur, et/ou la section de bague de codage côté entraînement (105) est disposée à une extrémité côté manchette de la protection anti-rotation (141) respective, et/ou **en ce que** le capteur (107) pour la détection de la section de bague de codage côté entraînement (105) est disposé radialement à l'extérieur de la manchette de capteur (111).

9. Capteur de couple et d'angle (1, 101) selon l'une des revendications précédentes, **caractérisé en ce que** la section de bague de codage côté entraînement (5, 105) présente une résolution égale à au moins deux fois, en particulier 4 fois, 6 fois, 8 fois, 10 fois ou 50 fois celle de la section de bague de codage côté sortie (6, 106), où la section de bague de codage côté sortie (6, 106) est en particulier conçue comme une bague polaire magnétique avec moins de 10, en particulier moins de 6, de préférence 2 ou 4 pôles, et/ou **en ce que** la section de bague de codage côté entraînement (5, 105) est conçue comme une bague polaire magnétique ou comme un aimant unique, et/ou **en ce que** le capteur (7, 107) pour la détection de la section de bague de codage côté entraînement (5, 105) et/ou un capteur (15, 115) pour la détection de la position angulaire sur la section de bague de codage côté sortie (6, 106) est/sont conçu(s) comme un capteur AMR.

10. Capteur de couple et d'angle (1, 101) selon l'une des revendications précédentes, **caractérisé en ce qu'**un déplacement radial de la section de bague de codage côté entraînement (5, 105) par rapport au capteur côté sortie (7, 107) est empêché au moyen d'un espaceur en particulier conçu comme un palier lisse rotatif.

11. Actionneur pour un dispositif de procédé technique comprenant un élément d'entraînement pneumatique pour l'accouplement à un élément de sortie d'une soupape de réglage du dispositif de procédé technique avec un capteur de couple et d'angle (1, 101) conçu selon l'une des revendications précédentes, pour la détermination du couple transmis de l'élément d'entraînement à l'élément de sortie.
